# EUROPÄISCHE PATENTANMELDUNG

(11) **EP 0 736 448 A1**
(43) Veröffentlichungstag der Anmeldung: **09.10.1996**
(21) Anmeldenummer: 96100685.5
(22) Anmeldetag: 18.01.1996
(51) Int. Cl.: B62K 25/08

(54) **Achsaufhängung für ein Zweirad**

(30) Priorität: 05.04.1995 DE 19512641
(71) Anmelder: Bayerische Motoren Werke Aktiengesellschaft, 80788 München (DE)
(72) Erfinder: Seidl, Josef, D-84130 Dingolfing (DE)

(57) **Zusammenfassung**

Es wird eine Achsaufhängung für ein federnd an einem Zweirad geführtes Rad beschrieben, das über eine Achse (8) mit einem um eine Fahrzeugquerachse schwenkbar angebrachten Längslenker (7) und mindestens einem Gleitrohr (3,4) geführt wird. Das Gleitrohr (3,4) wird längsverschieblich in einer Führung (11) gehalten und erstreckt sich so weit durch seine Führung (11) hindurch, daß es den Befestigungspunkt der Führung (11) an einem weiteren Fahrzeugteil überragt.

## Beschreibung

Die Erfindung bezieht sich auf Achsaufhängungen für federnd an einem Zweirad geführte Fahrzeugräder nach dem Oberbegriff des Hauptanspruchs.

Es ist bereits bekannt, federnd an einem Zweirad befestigte Fahrzeugräder durch Gleit- und Standrohre zu führen. Mindestens ein Gleitrohr ist dazu mit der Achse des Fahrzeugrades verbunden, während das zugehörige Standrohr in mindestens der Richtung seiner Längsachse unbeweglich an rahmenfesten Teilen des Zweirades angebracht ist. Gleit- und Standrohr werden bei einer Einfederbewegung des Fahrzeugrades teleskopisch ineinander geschoben. Eine solche Radaufhängung wird in der DE 41 10 954 A1 für ein lenkbares Vorderrad gezeigt.

Diese hat den Nachteil, daß zwischen Gleitrohr und Standrohr hohe Kontaktkräfte auftreten. Sie beeinflussen das Ansprechverhalten der Federung. Für ein feines Ansprechen der Federung bei geringen Radkräften muß deshalb die Führung des Gleitrohres im Standrohr sehr genau bearbeitet werden. Das betrifft sowohl die Passung zwischen Gleitrohr und Standrohr, als auch die Oberflächengüte und die Länge der Führungsfläche. Eine entsprechend genau gearbeitete teleskopische Führung für ein gutes Ansprechverhalten der Federung ist somit nicht preiswert herzustellen.

Daher ist es Aufgabe der Erfindung, eine Achsaufhängung für ein federnd an einem Zweirad geführtes Rad so auszubilden, daß sie preiswert herstellbar ist und trotzdem genügend Federungskomfort durch gutes Ansprechverhalten bietet.

Die Aufgabe wird erfindungsgemäß mit den kennzeichnenden Merkmalen des Hauptanspruchs gelöst. Vorteilhafte Ausgestaltungen der Erfindung ergeben sich aus den Unteransprüchen.

Nach der Erfindung ragt das Gleitrohr so weit in das Standrohr hinein, daß es den Befestigungspunkt des Standrohres am gefederten Fahrzeugteil überragt. Dadurch entsteht zwischen dem gefederten und ungefederten Fahrzeugteil ein günstiger Kraftflußverlauf, bei dem die Querkräfte zwischen den Bauteilen direkt übertragen werden, ohne daß Biegemomente aufgrund von Hebelarmen in der Kraftübertragung entstehen. Das verhindert ein Verkanten zwischen Standrohr und Gleitrohr und ermöglicht, daß, trotz kürzerer Führungsflächen und nicht so genauer Bearbeitung der Passung, die Kontaktkräfte zwischen dem Gleitrohr und seiner Führung geringer sind. Aufgrund des direkten Querkraftflusses vom Gleitrohr in dessen Führung im gefederten Teil des Fahrzeugs kann das Standrohr unter Umständen ganz entfallen bzw. auf die Länge seiner Führungsfläche reduziert werden. Bei Entfall des Standrohrs wird die Führungsfläche für das Gleitrohr direkt von einer Führung gebildet, die an dem Fahrzeugteil angebracht ist, durch das sich das Gleitrohr hindurch erstreckt.

In einer vorteilhaften Ausführung der Erfindung wird die Achsaufhängung für ein Hinterrad eines Zweirads so ausgeführt, daß sich das Gleitrohr durch eine am Fahrzeugrahmen festgelegte, um eine Querachse des Zweirads schwenkbar gestaltete Führung hindurch erstreckt. Die Führung ist entweder um die Achse in Fahrzeugquerrichtung drehbar oder aber zum Beispiel durch Verwendung von Gummielementen elastisch schwenkbar. Falls der ungefederte Teil der Achsaufhängung in Querrichtung nicht durch die Führung des Gleitrohrs festgelegt werden muß, kann auch eine kardanisch bewegliche Führung vorgesehen werden.

Eine bevorzugte Ausführung der Erfindung bei einem Vorderrad eines Zweirades ist so gestaltet, daß das Gleitrohr im Lenker des Zweirads geführt wird. Entweder durch ein in den Richtungen der Querachsen des Gleitrohrs kardanisch bewegliches Lager oder durch ein in allen Richtungen elastisches Lager. Eine kardanisch bewegliche Führung des Gleitrohrs an dem weiteren Fahrzeugteil, zum Beispiel durch ein Kugelgelenk, hat den Vorteil, daß das Gleitrohr exakt geführt und die Ansprechkraft der Federung gering gehalten wird. Verwendet man als Führung des Gleitrohrs ein Gummilager, in einer Ausführung zum Beispiel einen im weiteren Fahrzeugteil festgelegten O-Ring, ist die Führung des Gleitrohrs zusätzlich einfach herzustellen.

Werden für die Achsaufhängung zwei Gleitrohre verwendet, die die Achse beidseitig führen und die durch eine untere Gabelbrücke verbunden sind, so kann vorteilhafterweise ein Längslenker mit seinem vorderen Abschnitt über ein Universalgelenk in der Mitte der unteren Gabelbrücke angebracht sein. Eine höchst wirkungsvolle Abstützung zwischen den beweglichen Teilen der Achsaufhängung und den rahmenfesten Teilen des Fahrzeugs erhält man durch die Anordnung eines Federbeins, das den Längslenker am Rahmen abstützt. Die Gleitrohre werden dann vorteilhafterweise in einer oberen Gabelbrücke entlang ihrer Längsachse verschieblich geführt. Und zwar auf die Weise, daß in der oberen Gabelbrücke für jedes Gleitrohr eine in Richtung seiner Querachsen bewegliche Führung eingebaut ist. Die Gleitrohre erstrecken sich durch die Führung hindurch, über den Befestigungspunkt der Führung in der oberen Gabelbrücke hinaus. Desweiteren ist an der oberen Gabelbrücke noch eine Lenkwelle angebracht, die drehbar in einem Lenkkopf des Rahmens gelagert ist. So kann die Gabelbrücke durch einen mit ihr verbundenen Lenker um die Lenkwelle im Rahmen verdreht werden.

Diese Ausführungsform der Erfindung stellt eine besonders einfach ausgebildete Achsaufhängung eines Zweiradvorderrads dar, die preiswert hergestellt werden kann. Es sind hier keine aufwendig zu bearbeitenden Teleskopführungen vorhanden und trotzdem wird ein guter Federungskomfort gewährleistet.

Eine entsprechend für das Hinterrad ausgebildete Achsaufhängung besitzt einen um eine Fahrzeugquerachse drehbar am Fahrzeugrahmen angelenkten Längslenker, an dem das Fahrzeugrad über eine Achse festgelegt ist. Ein Gleitrohr stützt den Längslenker am Fahrzeugrahmen durch eine mindestens um eine Fahrzeugquerachse elastische oder bewegliche Führung am Fahrzeugrahmen ab. Dabei erstreckt sich das Gleitrohr durch diese Führung hindurch und überragt deren Befestigungspunkt am Fahrzeugrahmen. Vorteilhafterweise ist mit dem Gleitrohr ein Federungs- und/oder Dämpfungssystem verbunden.

Bei einer weiteren vorteilhaften Achsaufhängung für ein Hinterrad ist die Achse direkt an mindestens einem Gleitrohr angebracht. Das Gleitrohr ist dann um eine zur Fahrzeugquerachse parallele Achse schwenkbar an mindestens einem Längslenker befestigt. Die Führung des Gleitrohrs und des Längslenkers entspricht der vorher beschriebenen Ausführung.

Bei einer weiteren bevorzugten Ausführung der Erfindung sind die vorhandenen Gleitrohre durch jeweils ein topfförmiges Bauteil, das an dem weiteren Fahrzeugteil befestigt ist, abgedeckt. Eine solche Gleitrohrabdeckung ist vorteilhaft, da sie den Raum für jedes Gleitrohr zur Einfederbewegung freihält. Behinderungen durch das aus seiner Führung austretende Gleitrohr können damit vermieden werden.

Jeweils ein bevorzugtes Ausführungsbeispiel der Erfindung für eine Achsaufhängung eines Vorderrades und eines Hinterrades sind in der nachfolgenden Beschreibung und der zugehörigen Zeichnung näher dargestellt. Es zeigen:
- Figur 1: eine schematische Darstellung einer Vorderradaufhängung entsprechend der Erfindung,
- Figur 2: eine schematische Darstellung einer Hinterradaufhängung entsprechend der Erfindung.

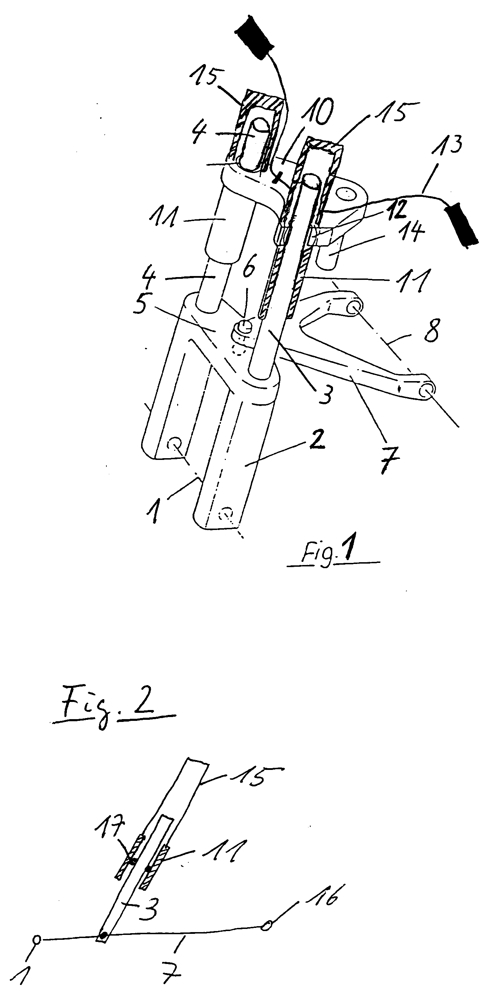

Nach Figur 1 wird ein nicht dargestelltes Vorderrad an einem Zweirad über eine Achse 1 um diese drehbar aber ansonsten fest in einer Gabel 2 geführt. Die Gabel 2 besteht aus je einem Gleitrohr 3, 4 an deren unterem Ende die Achse 1 befestigt ist. Die Gabel 2 besteht weiterhin aus einer unteren Gabelbrücke 5, die die beiden Gleitrohre 3, 4 über dem Vorderrad verbindet. In Fahrzeuglängsrichtung gesehen befindet sich in der Mitte der unteren Gabelbrücke 5 ein Universalgelenk 6, mit dem ein Längslenker 7 kardanisch beweglich verbunden ist. Der Längslenker 7 ist über eine nur angedeutet dargestellte Schwenkachse 8 um eine Querrichtung des Fahrzeugs schwenkbar mit einem nicht gezeichneten Fahrzeugrahmen verbunden. Zur Abstützung der Radaufstandskräfte befindet sich zwischen dem Längslenker 7 und dem nicht gezeichneten Fahrzeugrahmen eine nicht gezeichnete Federungs- und/oder Dämpfungseinrichtung, zum Beispiel als Federbein ausgebildet.

Mit dem Längslenker 7 zusammen übernehmen die Gleitrohre 3, 4 die Radführung. Dazu erstrecken sich diese durch eine obere Gabelbrücke 10 hindurch, in der sie durch eine Führung 11 in Richtung ihrer Querachsen festgelegt werden und in Richtung ihrer Längsachse gegen die Kraft des nicht gezeichneten Federbeins verschiebbar sind. Die Führung 11 ist so gestaltet, daß die Gleitrohre in dieser in Richtung ihrer Querachsen kardanisch beweglich sind. Dies wird erreicht durch die Lagerung der Führung 11 über ein elastisches Gummilager 12 in der oberen Gabelbrücke 10.

Zum Einleiten der Lenkbewegung in die obere Gabelbrücke 10 ist diese mit einem Lenker 13 verbunden und über eine Lenkachse 14 im nicht dargestellten Lenkkopf des nicht dargestellten Fahrzeugrahmens drehbar befestigt.

Damit bei einer Einfederbewegung des Vorderrades der Einfederweg für die Gleitrohre 3, 4 freigehalten wird, ist auf der oberen Gabelbrücke 10 für jedes Gleitrohr 3, 4 ein topfförmiges Bauteil als Abdeckkappe 15 für die Gleitrohre 3, 4 befestigt.

Figur 2 zeigt eine entsprechende Hinterradfederung. Ein nicht dargestelltes Hinterrad eines Zweirads wird um die Achse 1 drehbar aber ansonsten fest vom Längslenker 7 geführt. Der Längslenker 7 stützt sich über das Gleitrohr 3 mittels einer nicht gezeichneten Federungs- und/oder Dämpfungseinrichtung an einem nicht gezeichneten Fahrzeugrahmen ab. Dazu ist am Fahrzeugrahmen die Führung 11 für das Gleitrohr 3 um eine zur Querachse des Fahrzeugs parallele Achse schwenkbar festgelegt. Das Gleitrohr 3 erstreckt sich durch die Führung 11 hindurch, so daß es den Punkt, an dem die Führung 11 am Fahrzeugrahmen festgelegt ist, überragt. Bei einer Einfederbewegung des Hinterrads schwenkt der Längslenker 7 um eine weitere zur Querachse des Fahrzeugs parallele Achse 16 über die er am Fahrzeugrahmen festgelegt ist. Dabei schiebt sich das Gleitrohr 3 durch seine Führung 11. Um den Raum des Einfederwegs für das Gleitrohr 3 freizuhalten, ist oben an der Führung 11 die Abdeckkappe 15 befestigt.

Es wird noch darauf hingewiesen, daß es für die Erfindung unerheblich ist, ob bei einer Hinterradfederung wie im Ausführungsbeispiel beschrieben, die Achse 1 am Längslenker 7 angebracht und dieser vom Gleitrohr 3 abgestützt wird, oder die Achse 1 am unteren Ende des Gleitrohrs 3 befestigt und dieses vom Längslenker 7 abgestützt wird.

Desweiteren kann ebenso die Führung 11 am Fahrzeugrahmen starr angebracht sein, wenn die Winkelverschiebung des Gleitrohrs 3 beim Einfedern durch ein elastisches Gummilager, zum Beispiel einen O-Ring 17, ausgeglichen wird.

## Patentansprüche

1. Achsaufhängung für ein federnd an einem Zweirad geführtes Rad, das über eine Achse (1) von mindestens einem, um eine Fahrzeugquerachse schwenkbar angebrachten Längslenker (7) und mindestens einem Gleitrohr (3, 4) gehalten wird, wobei das Gleitrohr (3, 4) mittels einer in einem Befestigungspunkt an einem weiteren Fahrzeugteil festgelegten Führung (11) in seiner Längsrichtung verschieblich und in mindestens einer Querrichtung zu seiner Längsrichtung verdrehbar gehalten wird, dadurch gekennzeichnet, daß sich das Gleitrohr (3, 4) so weit durch seine Führung (11) hindurcherstreckt, daß es den Befestigungspunkt der Führung (11) an dem weiteren Fahrzeugteil überragt.

2. Achsaufhängung nach Anspruch 1, dadurch gekennzeichnet, daß die Führung (11) des Gleitrohres (3, 4) im weiteren Fahrzeugteil ein kardanisch bewegliches Lager ist.

3. Achsaufhängung nach Anspruch 1 oder 2, dadurch gekennzeichnet, daß die Führung (11) des Gleitrohres (3, 4) im weiteren Fahrzeugteil ein Gummilager ist.

4. Achsaufhängung nach Anspruch 1, dadurch gekennzeichnet, daß die Führung (11) des Gleitrohrs (3, 4) im weiteren Fahrzeugteil ein um eine zur Fahrzeugquerachse parallele Achse mindestens schwenkbewegliches Lager ist.

5. Achsaufhängung nach einem der Ansprüche 1 bis 4, zur Befestigung eines nicht lenkbaren Rades, dadurch gekennzeichnet, daß das weitere Fahrzeugteil ein rahmenfestes Teil ist.

6. Achsaufhängung nach einem der Ansprüche 1 bis 3, zur Befestigung eines lenkbaren Rades, dadurch gekennzeichnet, daß das weitere Fahrzeugteil ein lenkerfestes Teil ist.

7. Achsaufhängung nach Anspruch 6, dadurch gekennzeichnet, daß der Längslenker (7) über ein Universalgelenk (6) beweglich mit einem gleitrohrfesten Teil verbunden ist.

8. Achsaufhängung nach Anspruch 7, bestehend aus
- einer Achse (1), die beidseitig über Gleitrohre (3, 4) geführt wird,
- einer die Gleitrohre (3, 4) verbindenden unteren Gabelbrücke (5),
- einem Längslenker (7), der mit seinem vorderen Abschnitt in der Mitte der unteren Gabelbrücke (5) angebracht ist und um eine Fahrzeugquerachse schwenkbar am Fahrzeugrahmen festgelegt ist,
- einem Federungs- und/oder Dämpfungssystem zwischen den beweglichen Teilen der Achsaufhängung und rahmenfesten oder lenkerfesten Teilen des Fahrzeugs,
- einer in einem Lenkkopf des Fahrzeugrahmens über eine Lenkwelle (14) drehbar gelagerten, mit einem Lenker (13) verbundenen oberen Gabelbrücke (10) als weiteres Fahrzeugteil, in dem die Führungen (11) der Gleitrohre (3, 4) über jeweils ein kardanisch bewegliches Lager (12) festgelegt sind.

9. Achsaufhängung nach Anspruch 5, bestehend aus
- einer Achse (1), die über mindestens einen um eine Fahrzeugquerachse drehbar am Fahrzeugrahmen befestigten Längslenker (7a) oder mindestens ein Gleitrohr (3a) geführt wird,
- mindestens einem Gleitrohr (3a), das den Längslenker (7a) oder die Achse (1) am Fahrzeugrahmen drehbar abstützt,
- einem Federungs- und/oder Dämpfungssystem zwischen den beweglichen Teilen der Achsaufhängung und den rahmenfesten Teilen des Fahrzeugs.

10. Achsaufhängung nach einem der Ansprüche 1 bis 9, dadurch gekennzeichnet, daß an dem weiteren Fahrzeugteil ein topfförmiges Bauteil zur Abdeckung jedes Gleitrohrs (3, 4) so angebracht ist, daß sich das Gleitrohr bei einer Einfederbewegung in das topfförmige Bauteil hineinschiebt.
